# EUROPEAN PATENT APPLICATION

(11) **EP 2 741 530 A1**
(43) Date of publication of application: **11.06.2014**
(21) Application number: 12820568.9
(22) Date of filing: 10.05.2012
(51) Int. Cl.: H04W 12/06

(54) **ACCESS METHOD, SYSTEM AND MOBILE INTELLIGENT ACCESS POINT**

(30) Priority: 03.08.2011 CN 201110221068
(71) Applicant: ZTE Corporation, Shenzhen, Guangdong 518057 (CN)
(72) Inventor: YOU, Shilin, Shenzhen Guangdong 518057 (CN); MENG, Jun, Shenzhen Guangdong 518057 (CN); ZHAO, Youchun, Shenzhen Guangdong 518057 (CN); ZONG, Zaifeng, Shenzhen Guangdong 518057 (CN); ZHU, Xiaodong, Shenzhen Guangdong 518057 (CN); LIU, Jianye, Shenzhen Guangdong 518057 (CN); ZHU, Jinguo, Shenzhen Guangdong 518057 (CN); HUANG, Yanen, Shenzhen Guangdong 518057 (CN); XIE, Guosheng, Shenzhen Guangdong 518057 (CN)
(74) Representative: Modiano, Micaela Nadia
(86) International application number: PCT/CN2012/075307
(87) International publication number: WO 2013/016967

(57) **Abstract**

An access method is disclosed. The method includes: a mobile intelligent access point is attached to a core network and acquires an address of a 3rd Generation Partnership Project Authentication, Authorization and Accounting (3GPP AAA) server of a User Equipment (UE) from the core network; the UE requests the mobile intelligent access point and the 3GPP AAA server selected by the mobile intelligent access point for the UE to perform an Extensible Authentication Protocol (EAP) authentication on the UE; the UE initiates an access process to the mobile intelligent access point and acquires an Internet Protocol (IP) address of the UE; and the mobile intelligent access point selects a Packet Data Network Gateway (P-GW) for the UE and establishes an underlying access tunnel for the UE. Correspondingly, an access system and a mobile intelligent access point are further disclosed. With the disclosure, network authentication can be implemented to facilitate an operator to control the number of access users and to guarantee the network of the operator. Furthermore, a broadband mobile network is taken as a backhaul network, so as to reduce the reliability on a fixed network and improve the utilization of the broadband mobile network.

## Description

### TECHNICAL FIELD

The disclosure relates to the field of communications, and in particular to an access method, an access system and a mobile intelligent access point.

### BACKGROUND

During the development course of packet data, a Packet Switched (PS) network includes a Global System for Mobile Communications (GSM) EDGE Radio Access Network (GERAN) and a Universal Terrestrial Radio Access Network (UTRAN), and a core network includes a Serving General Packet Radio Service (GPRS) Support Node (SGSN) and a Gateway GPRS Support Node (GGSN). The SGSN, which is a service support point for a GERAN User Equipment (UE) and a UTRAN UE to access an Evolved Packet Core (EPC) network, is responsible for the location updating, paging management, bearer management and other functions of the UE; while the GGSN supports the edge routing function of the GPRS network, namely, the GGSN is responsible for routing forwarding of data of the GPRS network, and further protects the integrity of the data of the GPRS network via a firewall and a filtering function. The GGSN further has a charging function.

In order to remain the strong competitiveness of the 3rd generation mobile communication system in the field of mobile communications, it is necessary to improve its network performance and reduce network construction and operation costs. Therefore, a standard working group of the 3rd Generation Partnership Project (3GPP) is now dedicated to study the next generation evolution of a core network system, i.e., an EPC network, in order to provide the UE with a higher transmission rate and a shorter transmission delay. The EPC system supports the access of an Evolved Universal Terrestrial Radio Access Network (E-UTRAN), and supports the access of a non-3GPP access network, for example, a Wireless Local Area Network (WLAN), such as Wireless Fidelity (WiFi).

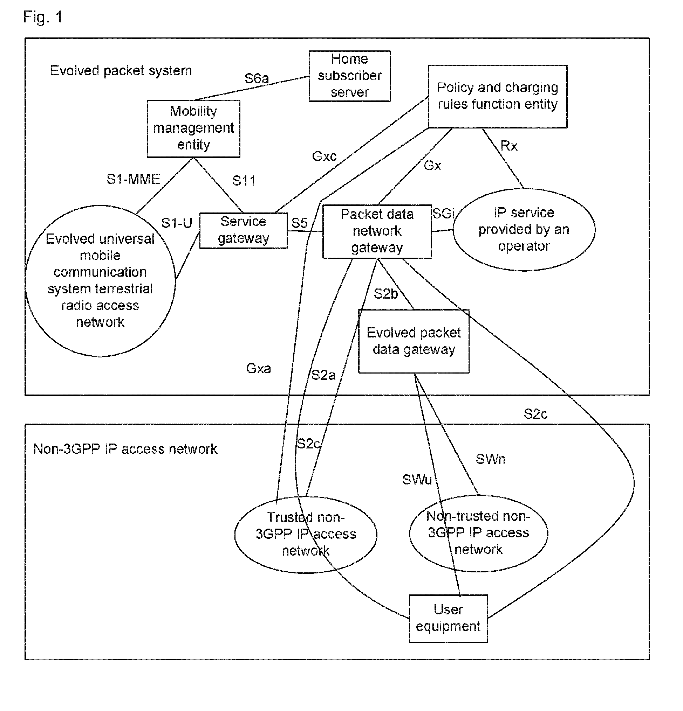

Fig. 1 is a diagram showing the system architecture of an Evolved Packet System (EPS) in the related art. As shown in Fig. 1, the EPS consists of an access network and an EPC network. The access network may be an E-UTRAN or the like. The EPC network includes a Mobility Management Entity (MME), a Serving Gateway (S-GW), a Packet Data Network Gateway (P-GW), a Home Subscriber Server (HSS), a 3GPP Authentication, Authorization and Accounting (3GPP AAA) server, a Policy and Charging Rules Function (PCRF) and other support nodes.

The MME is responsible for mobility management, signaling processing of a non-access-stratum, management of user contexts, and other works related to a control plane. The S-GW, which is an access gateway device connected with the E-UTRAN, forwards data between the E-UTRAN and the P-GW, and is responsible for caching paging waiting data. The P-GW, which is a border gateway between a 3GPP EPS and a Packet Data Network (PDN), is responsible for accessing a UE to the PDN and forwarding data between the EPS and the PDN. Furthermore, the existing P-GW can further support the access of a conventional PSN, namely, the P-GW has the function of the GGSN. The PCRF, which is a PCRF entity, is connected with an operator Internet Protocol (IP) service network through a receiving interface Rx and acquires service information. In addition, the PCRF is further connected with a gateway device in the network through a Gx/Gxa/Gxc interface, and is responsible for initiating the establishment of an IP bearer, guaranteeing the Quality of Service (QoS) of service data and controlling charging.

The EPS also supports the access of UE via other non-3GPP systems besides the E-UTRAN. The access of the non-3GPP systems is implemented through an S2a/b/c interface, and the P-GW serves as a data anchor point for the access of a 3GPP system and a non-3GPP system. In the system architecture of the EPS, the non-3GPP system is divided into a trusted non-3GPP IP access network and a non-trusted non-3GPP IP access network. The trusted non-3GPP IP access network can be connected with the P-GW directly through the S2a interface, while the non-trusted non-3GPP IP access network needs to be connected with the P-GW through an Evolved Packet Data Gateway (ePDG) and an interface between the ePDG and the P-GW is the interface S2b. The interface S2c, which is an interface between the UE and the P-GW, provides control and mobility management through a Mobile IPv6 Support for Dual Stack Hosts and Routers (DSMIPv6) protocol.

Existing wireless access network users access a fixed access network through a wireless access point, and then access an external network server to implement the corresponding data services. The fixed access adopts a fixed optical fiber/coaxial cable and other technologies to complete a backhaul network and to implement a network transmission function. The authentication for a wireless access user is controlled at the wireless access point, which controls the access of the wireless access user specifically by setting a password. A network operator cannot control the access of a user at a wireless access point deployed by the user, namely, the network cannot identify the corresponding user so as to fail to charge the user. Furthermore, the operator can acquire a verification password and a user name via other mobile devices instead of directly verifying and authenticating the access user.

Therefore, all existing backhaul networks adopt a fixed technological network optical fiber to lay a fixed network, which has a high requirement on the geography and is very difficult in laying. Both the existing 3G network and the existing Long Term Evolution (LTE) network belong to a high broadband network and can provide the same services as those provided by the fixed network, but there is still no technology for a mobile operator network to directly authenticate an access user in such scenario.

### SUMMARY

In view of this, the disclosure is intended to provide an access method, an access system and a mobile intelligent access point, so as to implement network authentication and guarantee the network of an operator, and further to reduce the reliability on a fixed network and improve the utilization of a broadband mobile network.

To this end, the technical solutions of the embodiments of the disclosure are implemented as follows.

An access method includes:
a mobile intelligent access point is attached to a core network and acquires an address of a 3GPP Authentication, Authorization and Accounting (3GPP AAA) server of a User Equipment (UE) from the core network;
the UE requests the mobile intelligent access point and the 3GPP AAA server selected by the mobile intelligent access point for the UE to perform an Extensible Authentication Protocol (EAP) authentication on the UE;
the UE initiates an access process to the mobile intelligent access point and acquires an Internet Protocol (IP) address of the UE; and
the mobile intelligent access point selects a P-GW for the UE and establishes an underlying access tunnel for the UE.

The process that the mobile intelligent access point acquires the address of the 3GPP AAA server of the UE from the core network may include:
the P-GW of the mobile intelligent access point encapsulates an address of a default 3GPP AAA server of the UE into a Protocol Configuration Option (PCO), and sends the encapsulated PCO to the mobile intelligent access point.

The process that the mobile intelligent access point selects the P-GW for the UE and establishes the underlying access tunnel for the UE may include:
the UE initiates a Dynamic Host Configuration Protocol (DHCP) discovery process to the mobile intelligent access point;
the mobile intelligent access point sends a proxy binding update message to the selected P-GW of the UE;
the P-GW of the UE establishes an IP-can connection of the UE with a PCRF/ Subscription Profile Repository (SPR);
the P-GW of the UE performs interaction with the 3GPP AAA server/a Home Subscriber Server (HSS) to enable the 3GPP AAA server/the HSS to store address information of the P-GW of the UE; and
the P-GW of the UE returns a proxy binding acknowledgement message to the mobile intelligent access point to complete the establishment of the underlying access tunnel.

An access system includes: a UE, a mobile intelligent access point and a core network, wherein
the mobile intelligent access point is configured to be attached to the core network and acquire an address of a 3GPP AAA server of the UE from the core network, and select a P-GW for the UE and establish an underlying access tunnel for the UE; and
the UE is configured to request the mobile intelligent access point and the 3GPP AAA server selected by the mobile intelligent access point for the UE to perform an EAP authentication on the UE, and initiate an access process to the mobile intelligent access point and acquire an IP address of the UE.

The mobile intelligent access point may include: a Long Term Evolution (LTE) UE module, a WiFi Access Point (AP) module and a core processing module, wherein
the LTE UE module may be configured to enable the mobile intelligent access point to access to an LTE core network via an E-UTRAN;
the WiFi AP module may be configured to process access of a WiFi terminal; and
the core processing module may be configured to convert WiFi messages/data into LTE messages/data and convert the LTE messages/data into the WiFi messages/data.

The process that the mobile intelligent access point acquires the address of the 3GPP AAA server of the UE from the core network may include:
a P-GW of the mobile intelligent access point encapsulates an address of a default 3GPP AAA server of the UE into a PCO and sends the encapsulated PCO to the mobile intelligent access point.

The process that the mobile intelligent access point selects the P-GW for the UE and establishes the underlying access tunnel for the UE may include:
the UE initiates a DHCP discovery process to the mobile intelligent access point;
the mobile intelligent access point sends a proxy binding update message to the selected P-GW of the UE;
the P-GW of the UE establishes an IP-can connection of the UE with a PCRF/SPR;
the P-GW of the UE performs interaction with the 3GPP AAA server/an HSS to enable the 3GPP AAA server/the HSS to store address information of the P-GW of the UE; and
the P-GW of the UE returns a proxy binding acknowledgement message to the mobile intelligent access point to complete the establishment of the underlying access tunnel.

A mobile intelligent access point includes: an LTE UE module, a WiFi AP module and a core processing module, wherein
the LTE UE module is configured to enable the mobile intelligent access point to access to an LTE core network via an E-UTRAN;
the WiFi AP module is configured to process access of a WiFi terminal; and
the core processing module is configured to convert WiFi messages/data into LTE messages/data and convert the LTE messages/data into the WiFi messages/data.

By means of the access method, the access system and the mobile intelligent access point provided by embodiments of the disclosure, a mobile intelligent access point is attached to a core network and acquires an address of a 3GPP AAA server of a UE from the core network; the UE requests the mobile intelligent access point and the 3GPP AAA server selected by the mobile intelligent access point for the UE to perform an EAP authentication on the UE; the UE initiates an access process to the mobile intelligent access point and acquires an IP address of the UE; and the mobile intelligent access point selects a P-GW for the UE and establishes an underlying access tunnel for the UE. With the disclosure, network authentication can be implemented to facilitate an operator to control the number of access users and to guarantee the network of the operator. Furthermore, a broadband mobile network is taken as a backhaul network, so as to reduce the reliability on a fixed network and improve the utilization of the broadband mobile network.

### BRIEF DESCRIPTION OF THE DRAWINGS

Fig. 1 is a diagram showing the system architecture of an EPS in the related art;
Fig. 2 is a flowchart of an access method provided by an embodiment of the disclosure;
Fig. 3 is a diagram showing the structure of an access system provided by Embodiment 1 of the disclosure;
Fig. 4 is a diagram showing a control plane protocol stack according to Embodiment 2 of the disclosure;
Fig. 5 is a diagram showing a user plane protocol stack according to Embodiment 2 of the disclosure; and
Fig. 6 is a flowchart that a UE accesses a network through a mobile intelligent access point according to Embodiment 3 of the disclosure.

### DETAILED DESCRIPTION

The basic idea of the disclosure is: a mobile intelligent access point is attached to a core network and acquires an address of a 3GPP AAA server of a UE from the core network; the UE requests the mobile intelligent access point and the 3GPP AAA server selected by the mobile intelligent access point for the UE to perform an EAP authentication on the UE; the UE initiates an access process to the mobile intelligent access point and acquires an IP address of the UE; and the mobile intelligent access point selects a P-GW for the UE and establishes an underlying access tunnel for the UE.

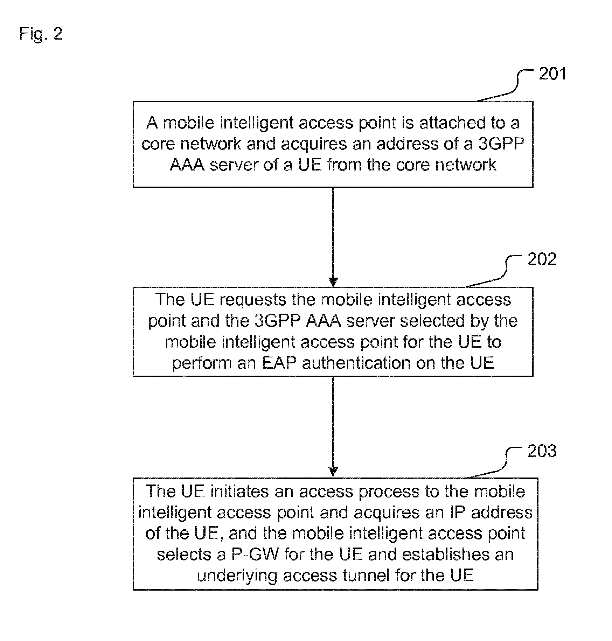

Fig. 2 is a flowchart of an access method provided by an embodiment of the disclosure. As shown in Fig. 2, the method includes:
Step 201: A mobile intelligent access point is attached to a core network and acquires an address of a 3GPP AAA server of a UE from the core network.
Step 202: The UE requests the mobile intelligent access point and the 3GPP AAA server selected by the mobile intelligent access point for the UE to perform an EAP authentication on the UE.
Step 203: The UE initiates an access process to the mobile intelligent access point and acquires an IP address of the UE, and the mobile intelligent access point selects a P-GW for the UE and establishes an underlying access tunnel (such as a PMIPv6 channel) for the UE.

An embodiment of the disclosure further proposes an access system. The access system includes: a UE, a mobile intelligent access point and a core network.

The mobile intelligent access point is configured to be attached to the core network and acquire an address of a 3GPP AAA server of the UE from the core network, and select a P-GW for the UE and establish an underlying access tunnel for the UE.

The UE is configured to request the mobile intelligent access point and the 3GPP AAA server selected by the mobile intelligent access point for the UE to perform an EAP authentication on the UE, and initiate an access process to the mobile intelligent access point and acquire an IP address of the UE.

The mobile intelligent access point includes: an LTE UE module, a WiFi AP module and a core processing module.

The LTE UE module is configured to enable the mobile intelligent access point to access to an LTE core network via an E-UTRAN.

The WiFi AP module is configured to process the access of a WiFi terminal.

The core processing module is configured to convert WiFi messages/data into LTE messages/data and convert the LTE messages/data into the WiFi messages/data.

The process that the mobile intelligent access point acquires the address of the 3GPP AAA server of the UE from the core network includes:
a P-GW of the mobile intelligent access point encapsulates an address of a default 3GPP AAA server of the UE into a PCO, and sends the encapsulated PCO to the mobile intelligent access point.

The process that the mobile intelligent access point selects the P-GW for the UE and establishes the underlying access tunnel for the UE includes:
the UE initiates a DHCP discovery process to the mobile intelligent access point;
the mobile intelligent access point sends a proxy binding update message to the selected P-GW of the UE;
the P-GW of the UE establishes an IP-can connection of the UE with a PCRF/SPR;
the P-GW of the UE performs interaction with the 3GPP AAA server/an HSS to enable the 3GPP AAA server/the HSS to store address information of the P-GW of the UE; and
the P-GW of the UE returns a proxy binding acknowledgement message to the mobile intelligent access point to complete the establishment of the underlying access tunnel.

An embodiment of the disclosure further proposes a mobile intelligent access point, which includes: an LTE UE module, a WiFi AP module and a core processing module.

The LTE UE module is configured to enable the mobile intelligent access point to access to an LTE core network via an E-UTRAN.

The WiFi AP module is configured to process the access of a WiFi terminal.

The core processing module is configured to convert WiFi messages/data into LTE messages/data and convert the LTE messages/data into the WiFi messages/data.

Preferred embodiments of the disclosure are described below with reference to the drawings. It should be understood that the preferred embodiments herein are intended to describe and explain the disclosure instead of limiting the disclosure. In the following description, for the purpose of explaining, many specific details are described to full understand the disclosure. However, obviously, the disclosure can also be implemented without these specific details. In addition, in the case of no conflict, namely, in the case of not departing from the spirit and scope of the claims, the following embodiments and every detail thereof can be combined freely.

### Embodiment 1

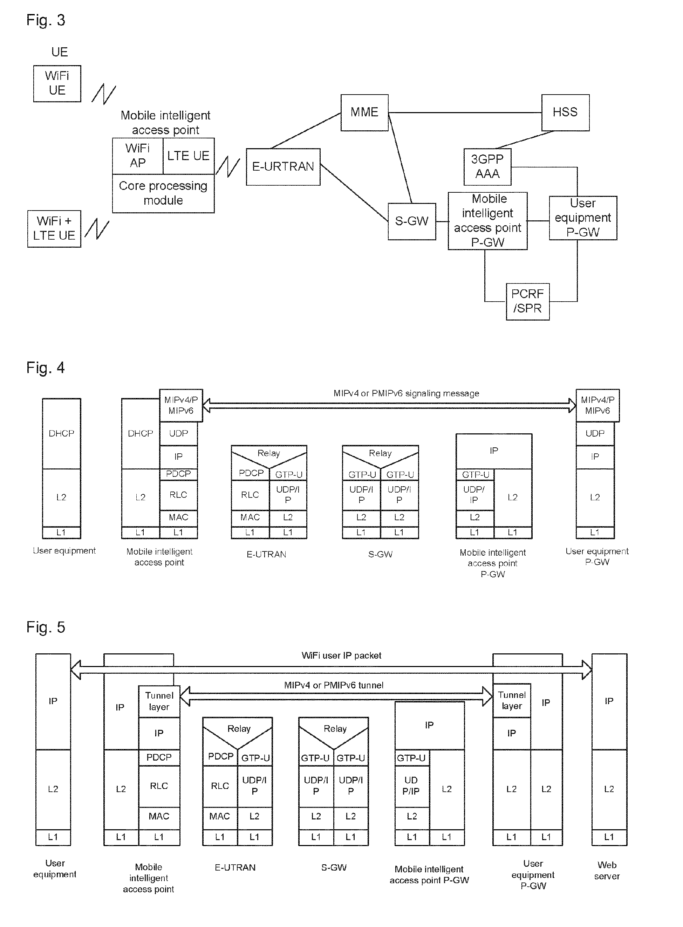

Fig. 3 is a diagram showing the structure of an access system provided by Embodiment 1 of the disclosure. As shown in Fig. 3, compared with the existing EPS architecture, a mobile intelligent access point is added in the system, and the mobile intelligent access point mainly includes an LTE UE module, a WiFi AP module and a core processing module.

The LTE UE module is configured to enable the mobile intelligent access point to access to an LTE core network via an E-UTRAN and provide the mobile intelligent access point with high broadband resources.

The WiFi AP module is a module for processing the access of a WiFi terminal, and a terminal having the WiFi function can access the mobile intelligent access point through the WiFi AP module to perform related Hyper Text Transport Protocol (HTTP) services after network authentication is performed on the terminal having the WiFi function.

The core processing module is configured to convert WiFi messages/data into LTE messages/data and convert the LTE messages/data into the WiFi messages/data.

The mobile intelligent access point can further forward an HTTP request of a UE. The mobile intelligent access point can be further registered to a network to acquire the address of the default 3GPP AAA server of the UE or the P-GW address of the UE from the network. When the P-GW of the UE is the same as that of the mobile intelligent access point, the P-GW address acquired by the mobile intelligent access point is that of the mobile intelligent access point.

The UE in the embodiment can be a single-mode UE supportive of WiFi or a dual-mode UE supportive of WiFi and LTE, which is collectively referred to as a UE for the purpose of convenient description. For the dual-mode UE, in case of any access way in which a signal is weak, a service can be continuously switched through an existing implementation method to an access way in which a signal is strong.

The LTE core network can verify the mobile intelligent access point and the UE accessing the mobile intelligent access point, and can further provide the mobile intelligent access point or the UE accessing the mobile intelligent access point with the same P-GW or different P-GWs.

### Embodiment 2

Figs. 4 and 5 are diagrams showing a control plane protocol stack and a user plane protocol stack according to Embodiment 2 of the disclosure respectively.

As shown in the control plane protocol stack in Fig. 4, a Layer 1/Layer 2 (L2/L1) are a data link layer and a physical layer respectively. The mobile intelligent access point establishes a user plane protocol stack of GPRS Tunneling Protocol for the User plane (GTP-U) with an E-UTRAN, an S-GW and a P-GW, and then establishes a Mobile IP version 4 (MIPv4) or a Proxy Mobile IP version 6 (PMIPv6) signaling tunnel with the P-GW of the UE, in order to transmit a signaling message conveniently.

As shown in the user plane protocol stack in Fig. 5, likewise, the mobile intelligent access point establishes a user plane protocol stack of GTP-U with an E-UTRAN, an S-GW and a P-GW, and then establishes an MIPv4 or a PMIPv6 user plane tunnel with the P-GW of the UE to implement an IP connection between the UE and a web server, so that a channel is established normally between the UE and the web server to facilitate the UE and the web server to exchange IP packets.

### Embodiment 3

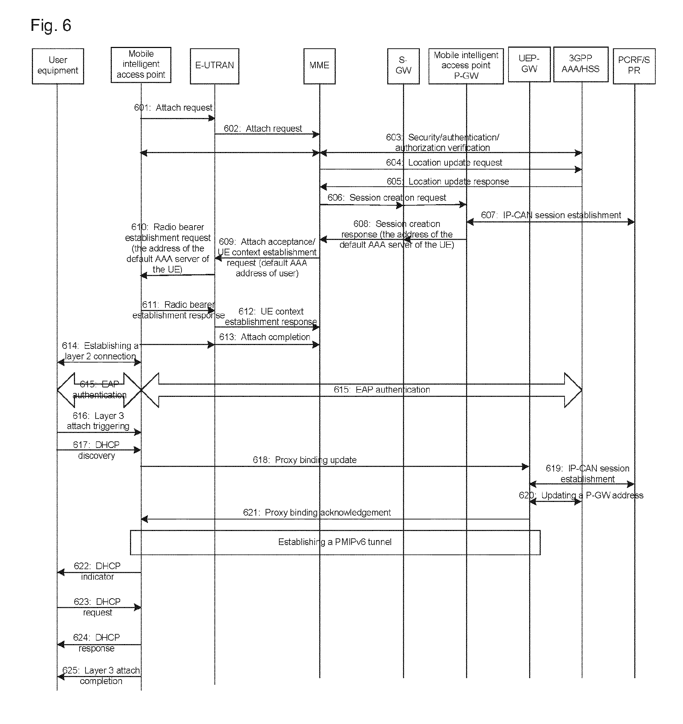

Fig. 6 is a flowchart that a UE accesses a network through a mobile intelligent access point according to Embodiment 3 of the disclosure. As shown in Fig. 6, the flow includes:
Steps 601 to 602: The mobile intelligent access point initiates an attach process and registers to a core network when the mobile intelligent access point is powered on. The non-access-stratum message is encapsulated in an initialization user message of an S1 interface by a base station (an E-UTRAN) to be transmitted to an MME.
Step 603: If there is no user context information in the network or an attach request message lacks integrity protection or the integrity protection is failed, the MME of the core network authenticates the UE.
Steps 604 to 605: If there is no user subscription data in the MME, a location update request message is sent to a 3GPP AAA server/an HSS, and the location update request message includes an MME identifier, a user identifier, an update type and other information. The HSS sends the user subscription data to the MME in a location update response message, and the location update response message includes a subscription APN and a QoS parameter borne by default by each APN.
Step 606: In order to support the user to be always online, the MME establishes the default bearer of the core network side between the S-GW and the P-GW through the QoS parameter of the subscription default bearer. The MME sends a creation session request to the P-GW through the S-GW, wherein the creation session request carries the related QoS parameters of the default bearer, charging features and other related parameters.
Step 607: The P-GW establishes an IP-can connection of the mobile intelligent access point with a PCRF/SPR.
Step 608: The P-GW authorizes the requested bearer QoS and sends a session creation response to the MME through the S-GW.

In order to reduce the influence on a network element of an access network as much as possible, the P-GW can encapsulate the address of the default 3GPP AAA server of the UE or a P-GW address indicator of the UE into a PCO and send the encapsulated PCO to the UE. A PCO parameter is only transmitted between the mobile intelligent access point and the P-GW of the mobile intelligent access point, and is not parsed by other network elements.

If the P-GW address of the UE is this P-GW address, the P-GW of the UE is the same as that of the mobile intelligent access point.

Step 609: A corresponding radio bearer needs to be activated after the default bearer of the core network side is established completely. The MME sends the context of the UE (i.e., the UE context of the mobile intelligent access point) and the established bearer QoS parameter to the base station through an initialization context establishment request message. An attach acceptance message is also encapsulated in the initialization context establishment request message to be sent to the UE. The attach acceptance message includes a temporary user identifier allocated from the MME to the UE and a bearer context request established for the UE.

Steps 610 to 611: The base station establishes a corresponding air interface bearer according to the bearer information indicated by the core network.

Step 612: The base station returns an initialization context establishment response message to the core network after the air interface bearer is established completely.

Step 613: The mobile intelligent access point returns a registration completion message to the MME via the base station.

Step 614: The UE requests the mobile intelligent access point to execute the specific layer 2 initial access process of a non-3GPP access network.

Step 615: The UE request the mobile intelligent access point and the default 3GPP AAA server selected by the mobile intelligent access point for the UE to perform an EAP authentication on the UE.

Step 616: After the authentication is successful, the UE is triggered to request the mobile intelligent access point to execute the specific layer 3 attach flow of non-3GPP access, and the mobile intelligent access point selects a P-GW for the access of the UE.

Step 617: The UE initiates a DHCP discovery process to the mobile intelligent access point.

Step 618: The mobile intelligent access point sends a proxy binding update message to the selected P-GW of the UE.

Step 619: The P-GW of the UE establishes an IP-can connection of the UE with a PCRF/SPR.

When the P-GW of the UE is combined with the P-GW of the mobile intelligent access point, the P-GW of the UE will update the QoS of the mobile intelligent access point for the policy server of the mobile intelligent access point according to the QoS parameter condition of the mobile intelligent access point after the QoS parameter of the user is acquired by the P-GW of the UE, so as to guarantee the QoS of the user.

When the P-GW of the UE is separated from the P-GW of the mobile intelligent access point, the P-GW address of the mobile intelligent access point can be acquired in a binding update request. After the related service parameter is acquired by the P-GW of the UE, the P-GW of the user transmits the QoS of the user and the QoS parameter condition of the corresponding mobile intelligent access point to the P-GW of the mobile intelligent access point. The P-GW of the mobile intelligent access point updates the QoS parameter of the mobile intelligent access point for the policy server of the mobile intelligent access point according to the QoS parameter condition of the mobile intelligent access point, so as to guarantee the QoS of the user. Alternatively, the policy server of the UE notifies the QoS parameter of the UE of the policy server of the mobile intelligent access point according to the information of the mobile intelligent access point, and the policy server of the mobile intelligent access point updates the QoS parameter for the P-GW of the mobile intelligent access point according to the QoS parameter of the UE and the QoS parameter of the mobile intelligent access point, so as to guarantee the QoS of the UE.

Step 620: The P-GW of the UE performs interaction with the 3GPP AAA server or the HSS to enable the 3GPP AAA server/the HSS to store address information of the P-GW of the UE.

Step 621: The P-GW of the UE returns a proxy binding acknowledgement message to the mobile intelligent access point, and the proxy binding acknowledgement message includes the IP address allocated from the P-GW to the UE.

Thus, the mobile intelligent access point establishes a PMIPv6 tunnel with the P-GW of the UE, and an MIPv4 tunnel can also be established by using existing technology.

Step 622: The mobile intelligent access point returns a DHCP indication message including the address of a DHCP server to the UE, and the address of the DHCP server is that of the mobile intelligent access point.

Step 623: The UE initiates a DHCP request to the mobile intelligent access point.

Step 624: The mobile intelligent access point returns a DHCP response message to the UE, and the DHCP response message includes the IP address allocated from the mobile intelligent access point to the UE in Step 621.

Step 625: A trusted non-3GPP IP access gateway returns a layer 3 attach completion message to the UE.

Thus, the UE is authenticated by the 3GPP network, and can perform a normal data service by taking an LTE network as a backhaul network.

The above are only preferable embodiments of the disclosure, and are not intended to limit the scope of protection of the claims of the disclosure. Those skilled in the art can make various modifications and variations to the disclosure. Any modifications, equivalent substitutions, improvements or the like made within the concept and principle of the disclosure shall fall within the scope of protection of the claims of the disclosure.

## Claims

1. An access method, comprising:
attaching a mobile intelligent access point to a core network, and acquiring, by the mobile intelligent access point, an address of a 3rd Generation Partnership Project Authentication, Authorization and Accounting (3GPP AAA) server of a User Equipment (UE) from the core network;
requesting, by the UE, the mobile intelligent access point and the 3GPP AAA server selected by the mobile intelligent access point for the UE to perform an Extensible Authentication Protocol (EAP) authentication on the UE;
initiating, by the UE, an access process to the mobile intelligent access point and acquiring an Internet Protocol (IP) address of the UE; and
selecting, by the mobile intelligent access point, a Packet Data Network Gateway (P-GW) for the UE and establishing an underlying access tunnel for the UE.

2. The method according to claim 1, wherein the step of acquiring, by a mobile intelligent access point, an address of a 3GPP AAA server of a UE from the core network comprises:
encapsulating, by a P-GW of the mobile intelligent access point, an address of a default 3GPP AAA server of the UE into a Protocol Configuration Option (PCO), and sending the encapsulated PCO to the mobile intelligent access point.

3. The method according to claim 1, wherein the step of selecting, by the mobile intelligent access point, a P-GW for the UE and establishing an underlying access tunnel for the UE comprises:
initiating, by the UE, a Dynamic Host Configuration Protocol (DHCP) discovery process to the mobile intelligent access point;
sending, by the mobile intelligent access point, a proxy binding update message to the selected P-GW of the UE;
establishing, by the P-GW of the UE, an IP-can connection of the UE with a Policy and Charging Rules Function (PCRF)/Subscription Profile Repository (SPR);
performing, by the P-GW of the UE, interaction with the 3GPP AAA server/a Home Subscriber Server (HSS) to enable the 3GPP AAA server/the HSS to store address information of the P-GW of the UE; and
returning, by the P-GW of the UE, a proxy binding acknowledgement message to the mobile intelligent access point to complete the establishment of the underlying access tunnel.

4. An access system, comprising: a User Equipment (UE), a mobile intelligent access point and a core network, wherein
the mobile intelligent access point is configured to be attached to the core network and acquire an address of a 3rd Generation Partnership Project Authentication, Authorization and Accounting (3GPP AAA) server of the UE from the core network, and select a Packet Data Network Gateway (P-GW) for the UE and establish an underlying access tunnel for the UE; and
the UE is configured to request the mobile intelligent access point and the 3GPP AAA server selected by the mobile intelligent access point for the UE to perform an Extensible Authentication Protocol (EAP) authentication on the UE, and initiate an access process to the mobile intelligent access point and acquire an Internet Protocol (IP) address of the UE.

5. The system according to claim 4, wherein the mobile intelligent access point comprises: a Long Term Evolution (LTE) UE module, a Wireless Fidelity (WiFi) Access Point (AP) module and a core processing module, wherein
the LTE UE module is configured to enable the mobile intelligent access point to access to an LTE core network via an Evolved Universal Terrestrial Radio Access Network (E-UTRAN);
the WiFi AP module is configured to process access of a WiFi terminal; and
the core processing module is configured to convert WiFi messages/data into LTE messages/data and convert the LTE messages/data into the WiFi messages/data.

6. The system according to claim 4, wherein the process that the mobile intelligent access point acquires the address of the 3GPP AAA server of the UE from the core network comprises:
a P-GW of the mobile intelligent access point encapsulates an address of a default 3GPP AAA server of the UE into a Protocol Configuration Option (PCO) and sends the encapsulated PCO to the mobile intelligent access point.

7. The system according to claim 4, wherein the process that the mobile intelligent access point selects the P-GW for the UE and establishes the underlying access tunnel for the UE comprises:
the UE initiates a Dynamic Host Configuration Protocol (DHCP) discovery process to the mobile intelligent access point;
the mobile intelligent access point sends a proxy binding update message to the selected P-GW of the UE;
the P-GW of the UE establishes an IP-can connection of the UE with a Policy and Charging Rules Function (PCRF)/Subscription Profile Repository (SPR);
the P-GW of the UE performs interaction with the 3GPP AAA server/a Home Subscriber Server (HSS) to enable the 3GPP AAA server/the HSS to store address information of the P-GW of the UE; and
the P-GW of the UE returns a proxy binding acknowledgement message to the mobile intelligent access point to complete the establishment of the underlying access tunnel.

8. A mobile intelligent access point, comprising: a Long Term Evolution (LTE) User Equipment (UE) module, a Wireless Fidelity (WiFi) Access Point (AP) module and a core processing module, wherein
the LTE UE module is configured to enable the mobile intelligent access point to access to an LTE core network via an Evolved Universal Terrestrial Radio Access Network (E-UTRAN);
the WiFi AP module is configured to process access of a WiFi terminal; and
the core processing module is configured to convert WiFi messages/data into LTE messages/data and convert the LTE messages/data into the WiFi messages/data.
